# FASCICULE DE BREVET EUROPEEN

(11) **EP 0 701 751 B1**
(45) Date de publication et mention de la délivrance du brevet: **03.12.1997**
(21) Numéro de dépôt: 93921996.0
(22) Date de dépôt: 05.10.1993
(51) Int. Cl.: H04B 1/38, H04B 1/08

(54) **COMBINE AUTORADIO AVEC APPAREIL EMETTEUR-RECEPTEUR INTEGRE**
AUTORADIO MIT EINGEBAUTEM SENDEEMPFÄNGER
CAR-RADIO COMBINATION SET WITH AN INTEGRATED TRANSCEIVER DEVICE

(30) Priorité: 26.05.1993 FR 9306546
(43) Date de publication de la demande: 20.03.1996
(73) Titulaire: Lellouche, Katia, F-06300 Nice (FR)
(72) Inventeur: Lellouche, Katia, F-06300 Nice (FR)
(74) Mandataire: Hautier, Jean-Louis
(86) Numéro de dépôt international: FR9300981
(87) Numéro de publication internationale: WO9428636

(56) Documents cités:
- EP-A- 0 483 956
- DE-A- 4 000 425
- US-A- 4 060 766

## Description

La présente invention concerne un combiné autoradio classique du type utilisant une radio associée soit à un lecteur de cassettes audiophoniques, soit à un lecteur de disques compacts, soit à un lecteur de cassettes digitales compactes.

A cet ensemble est intégré un appareil émetteur-récepteur qui fonctionne sur la bande de fréquence 27-28 mégahertz (MHz) ou toute autre bande de fréquence autorisée.

L'état de la technique prouve que de nombreux travaux ont été effectués tant dans le domaine des autoradios que dans celui des émetteurs-récepteurs.

Le document FR-A-2.678.777 concerne un dispositif permettant de donner à une antenne fonctionnant dans la bande de fréquence 27-28 MHz l'apparence et les dimensions d'une antenne de radiotéléphone fonctionnant dans des fréquences beaucoup plus élevées 400 ou 900 MHz par exemple.

Le document FR-A-2.632.756 concerne un dispositif permettant une lecture immédiate des stations émettrices radiophoniques, leurs fréquences ainsi que les villes où elles émettent. Il est constitué d'un boîtier, présentant un orifice dans lequel se déroulent à l'aide des boutons les informations sur les stations émettrices. Cette information est rendue plus lisible à travers une loupe qui est collée sur le boîtier. Au dos du boîtier se trouve un adhésif double face qui permet de coller le boîtier à l'endroit choisi par l'utilisateur. De plus, il existe sur le boîtier des emplacements publicitaires destinés à des annonceurs commerciaux.

Ces documents touchent soit au perfectionnement d'accessoires de l'autoradio, tels qu'une antenne commune pour radio et téléphone par exemple, soit au perfectionnement de l'autoradio lui-même.

Aucun document ne concerne à la fois les autoradios et les accessoires comme les émetteurs-récepteurs.

Le document US-A-4.060.766 a pour objet un système d'interrupteur automatique amélioré pour la commutation entre deux sources de signaux audiophoniques provenant d'un émetteur-récepteur, d'une part, et d'une radio ou magnétophone, d'autre part. Pour cela un transistor placé dans le circuit silencieux de commande de l'appareil émetteur-récepteur commute les signaux audio, provenant soit de l'appareil émetteur-récepteur soit de la radio ou du magnétophone, par l'intermédiaire de diodes commutatrices respectives vers un circuit d'amplification terminal, ce qui réduit la complexité et le coût d'un tel système.

Ce document décrit de façon assez précise la présélection de stations et les moyens donnant la priorité d'écoute, néanmoins la réalisation d'un appareil compact intégrant un appareil émetteur-récepteur et une radio dans un même compartiment standard destiné à recevoir un auto-radio classique n'est pas révélée.

Le document EP-A-0.483.956 décrit un appareil radio destiné à une installation sur véhicule, qui comporte un récepteur radio de divertissement par radio-diffusion et un émetteur- récepteur de téléphone mobile radio combiné dans un boîtier unique conçu pour être à la taille dans un évidement de montage normalement prévu dans le véhicule afin d'adapter l'unité standard audio de divertissement en voiture. Ce récepteur et l'émetteur-récepteur peuvent utiliser en commun un amplificateur audio et un haut-parleur externe. De préférence, le récepteur est automatiquement mis en sourdine lorsque le téléphone est utilisé.

Cet appareil ne concerne que l'intégration d'un téléphone mobile dans un autoradio. Ce type d'appareil téléphonique comporte de nombreuses caractéristiques particulières (un seul canal, utilisation en duplex) qui nécessitent une structure bien précise (un processeur pour l'émetteur-récepteur, un processeur pour l'autoradio). De plus aucun système d'élimination des parasites n'est prévu, ce qui n'est pas le cas de la présente invention.

Le but essentiel est de proposer un appareil qui ne prend pas plus de place qu'un autoradio classique, et qui pourtant assume des fonctions beaucoup plus importantes, du fait de la présence d'un émetteur-récepteur, ce qui est un gage de sécurité.

Un autre but de cette invention est de permettre à l'utilisateur d'écouter son autoradio, sans avoir à faire de manipulation pour savoir ce qui se dit sur l'appareil émetteur-récepteur, du fait de la présence d'un commutateur donnant la priorité audit appareil émetteur-récepteur par rapport à l'autoradio.

A cet effet, le combiné autoradio comprend dans un boîtier standard :
- une radio,
- un lecteur de cassettes audiophoniques, de disques compacts,
- un appareil émetteur-récepteur fonctionnant dans la bande de fréquence 27-28 mégahertz (MHz), et
- des moyens d'élimination des parasites présents aux fréquences d'utilisation qui peuvent interférer entre l'appareil émetteur-récepteur et le reste du combiné autoradio,
deuxièmement, que l'appareil émetteur-récepteur peut être mis en veille par l'intermédiaire d'un commutateur qui possède un moyen donnant la priorité d'écoute à la fonction émetteur-récepteur dès qu'un message est réceptionné sur la bande de fréquence de 27-28 MHz, de sorte que le commutateur coupe simultanément les fonctions non prioritaires, telles que la radio ou le lecteur lorsque l'un d'eux est en fonction, et troisièmement, que le moyen donnant la priorité d'écoute à la fonction émetteur-récepteur dès qu'un message est réceptionné est formé par un décodeur ou comparateur ayant une valeur de seuil prédéterminée, de sorte que lorsque le signal reçu est en deçà de cette valeur, la fonction d'écoute de la radio ou du lecteur est conservée, lorsque le signal est au-delà de cette valeur, le commutateur va activer la fonction d'écoute de l'appareil émetteur-récepteur et stopper la fonction d'écoute de la radio ou du lecteur

Le combiné autoradio et l'appareil émetteur-récepteur sont reliés à au moins une antenne commune.

Les moyens d'élimination des parasites sont formés par des feuilles d'aluminium.

Les moyens d'élimination des parasites sont formés par des feuilles de cuivre.

Les moyens d'élimination des parasites sont constitués par des bobines métalliques.

Les moyens d'élimination présents au niveau des tuners AM et FM sont formés par un boîtier métallique de sensiblement 0,5 millimètre (mm) d'épaisseur.

Les moyens d'élimination, présents au niveau de la partie haute fréquence et fréquence intermédiaire en modulation de fréquence (FM), sont formés par un boîtier métallique de sensiblement 1 mm d'épaisseur.

Le combiné autoradio est formé par au moins un boîtier standard encastrable.

Le combiné autoradio possède une façade amovible.

Les dessins ci-joints sont donnés à titre d'exemples indicatifs et non limitatifs. Ils représentent plusieurs modes de réalisation préférés selon l'invention. Ils permettront de comprendre aisément l'invention.

La figure 1 représente une vue schématique du commutateur et de son environnement.

La figure 2 représente une vue synoptique des composants du combiné autoradio dans laquelle il y a une antenne pour la radio et une antenne pour l'appareil émetteur-récepteur.

La figure 3 représente une vue schématique du commutateur.

La figure 4 représente une vue synoptique des composants du combiné autoradio dans laquelle il y a une antenne commune.

La figure 5 représente une vue schématique du circuit électronique permettant à l'utilisateur de faire un choix d'écoute prioritaire de l'appareil émetteur-récepteur lorsqu'un message clair est reçu ; ce choix est le fait du commutateur, et la priorité d'écoute se fait par rapport à la radio ou au lecteur de cassettes audiophoniques ou de disques compacts que l'on écoute.

La figure 6 représente une vue de face d'un combiné autoradio, dans lequel les éléments essentiels sont la radio, le lecteur de cassettes audiophoniques et l'appareil émetteur-récepteur.

La figure 7 représente une vue de face d'un combiné autoradio, dans lequel les éléments essentiels sont la radio, le lecteur de disques compacts et l'appareil émetteur-récepteur.

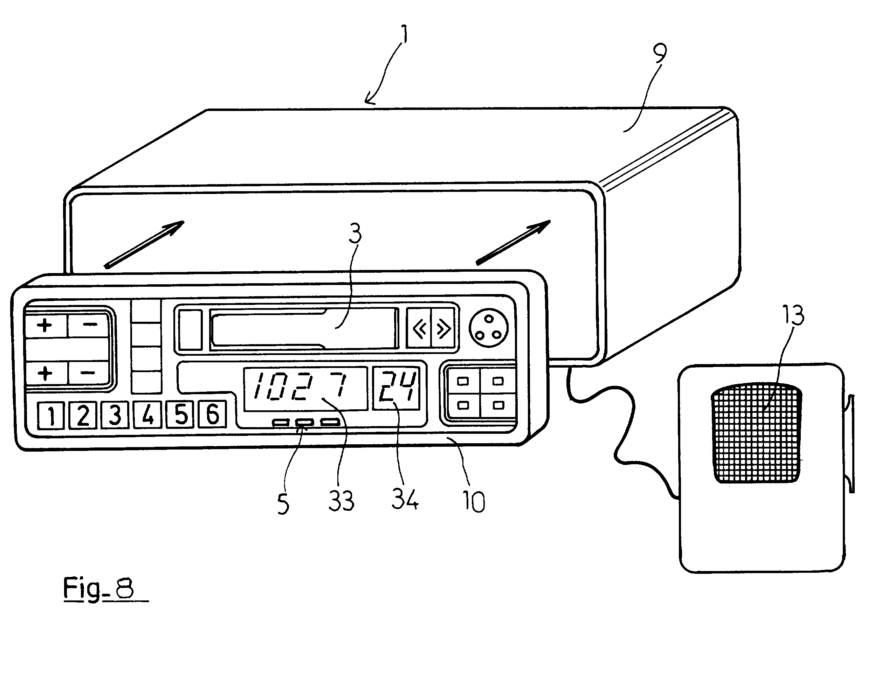

Enfin la figure 8 représente une vue en perspective d'un combiné autoradio dont la façade est amovible.

La présente invention concerne un combiné autoradio 1 de type classique qui comprend à l'intérieur d'un boîtier standard, de façon générale connue, une radio 2 et un lecteur de cassettes audiophoniques ou de disques compacts 3.

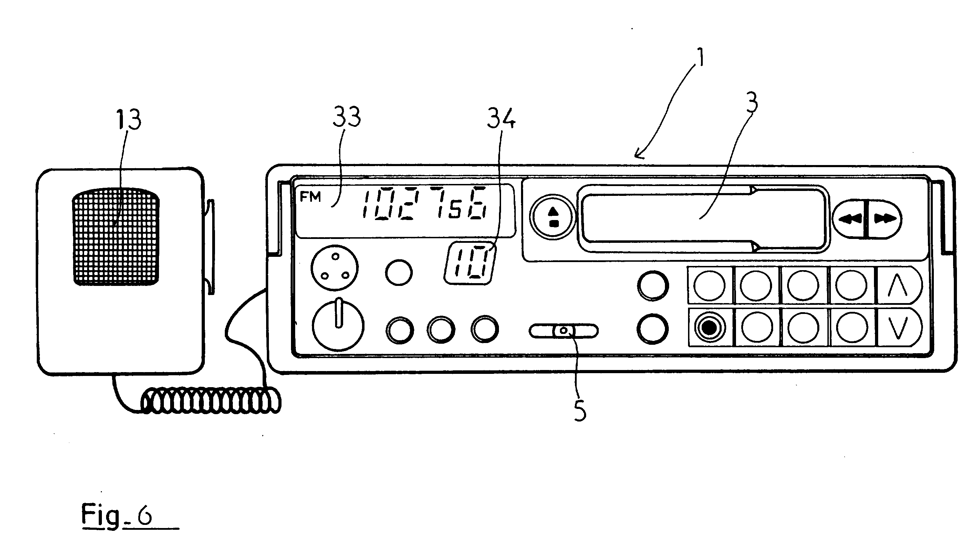

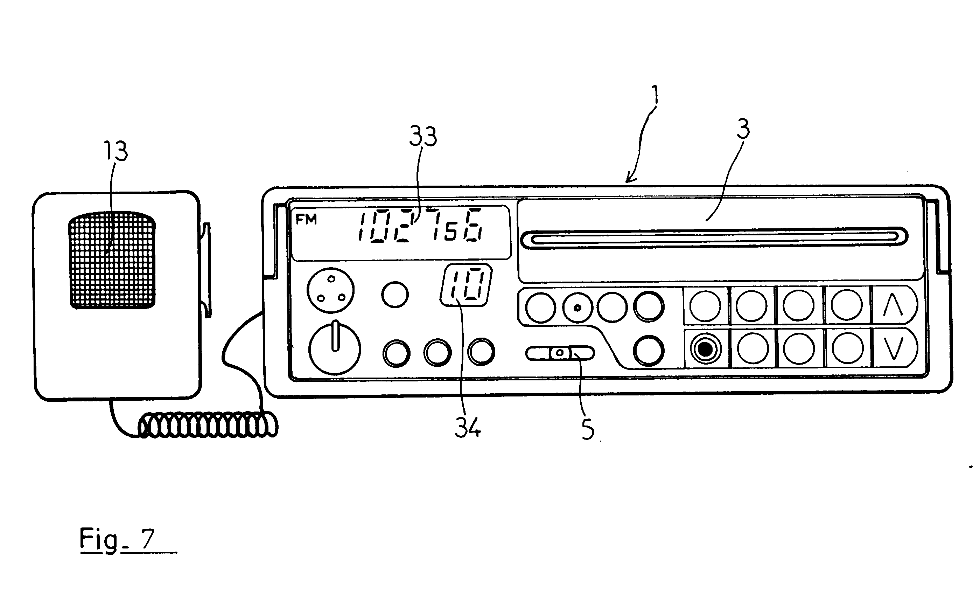

Selon les figures 6 et 8, la radio 2 sera associée à un lecteur de cassettes audiophoniques alors que dans le cas de la figure 7, l'association se fera entre la radio 2 et le lecteur de disques compacts 3.

Ce combiné autoradio possède un écran ou afficheur de la fréquence radio 33 comme sur tous les combinés autoradio existant actuellement sur le marché.

Le combiné autoradio peut posséder des touches mémoire pour enregistrer des stations de radio, des touches mono-stéréo afin de changer la qualité auditive du lecteur 3 ou de la radio 2, des recherches automatiques de station, des contrôles du volume, de la balance, de la tonalité, etc.

Le combiné 1 comporte bien entendu toutes les touches permettant le bon fonctionnement du lecteur 3, que celui-ci soit un lecteur de cassettes audiophoniques ou de disques compacts.

Il est même prévu une touche permettant de conserver une station tout au long du parcours du véhicule dans lequel l'autoradio fonctionne.

A tous ces éléments constitutifs d'un combiné autoradio 1 classique, est ajouté un appareil émetteur-récepteur 4 qui peut fonctionner dans la bande de fréquence 27-28 mégahertz ci-après représenté par le symbole MHz ou toute autre bande de fréquence autorisée, et par la présence des moyens d'élimination des parasites présents aux fréquences d'utilisation de la radio 2 ou de l'appareil émetteur-récepteur 4, de sorte que les interférences entre ledit appareil émetteur-récepteur 4 et le reste du combiné autoradio 1 sont limités au maximum.

Comme cela est représenté aux figures 6 à 8, le combiné autoradio 1 possède non seulement la radio 2, le lecteur 3, mais également l'appareil émetteur-récepteur 4.

Le combiné autoradio 1 possède donc un afficheur 34 permettant d'indiquer le canal d'utilisation de l'appareil émetteur-récepteur 4.

Il existe bien entendu un bouton permettant de faire varier la valeur du canal en fonction du choix de l'utilisateur.

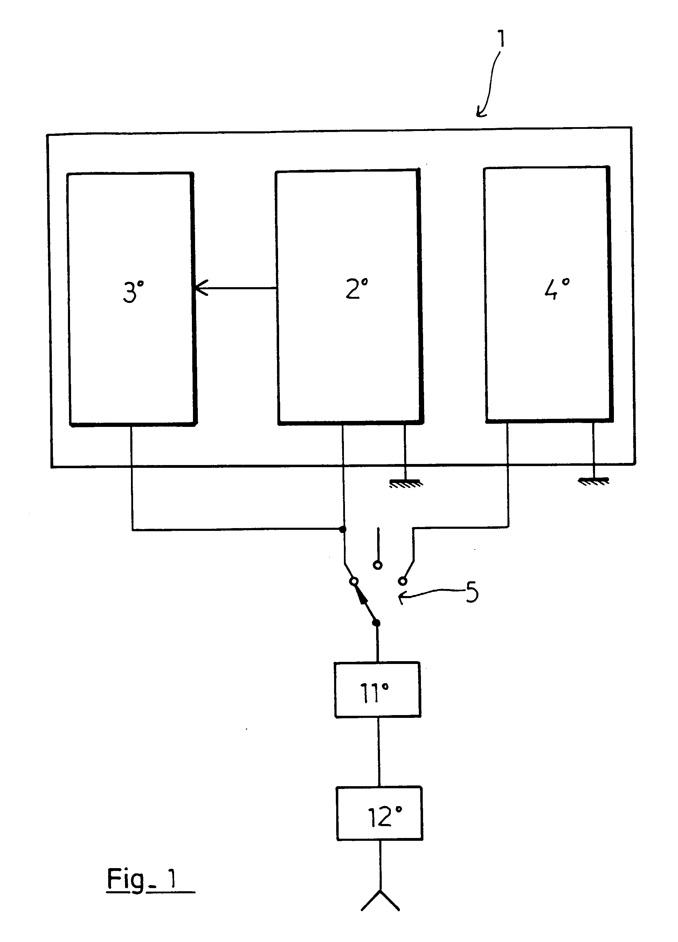

L'appareil émetteur-récepteur 4 peut être mis en veille par l'intermédiaire d'un commutateur 5 représenté à la figure 1.

Ce commutateur 5 est un moyen qui permet de donner la priorité d'écoute à l'appareil émetteur-récepteur 4 dès qu'un message clair est réceptionné sur la bande de fréquence 27-28 MHz, ou sur toute autre bande de fréquence autorisée de sorte que le commutateur 5 coupe simultanément les fonctions non prioritaires telles que celles de la radio 2 ou du lecteur 3 qui était en fonctionnement avant la réception du message clair sur la bande de fréquence 27-28 MHz ou sur toute autre bande de fréquence autorisée.

Le pôle gauche, où est pointé sur la figure 1 le commutateur 5, permet de faire fonctionner uniquement le lecteur 3 ou la radio 2.

Sur le pôle droit, le fonctionnement est uniquement celui de l'appareil émetteur-récepteur 4.

Le dernier pôle, qui est le pôle central, permet quant à lui, le fonctionnement de la radio 2 ou du lecteur 3 avec un basculement automatique sur l'appareil émetteur-récepteur 4 dès qu'un message clair est lancé sur les ondes 27-28 MHz.

L'alimentation du commutateur 5 est le fait d'une alimentation par batterie 12 afin de transmettre par exemple une tension de 12, 22 ou 24 volts, comme c'est le cas sur une voiture.

Il peut également y avoir la présence d'un régulateur d'alimentation 11 afin d'avoir un courant de valeur stable.

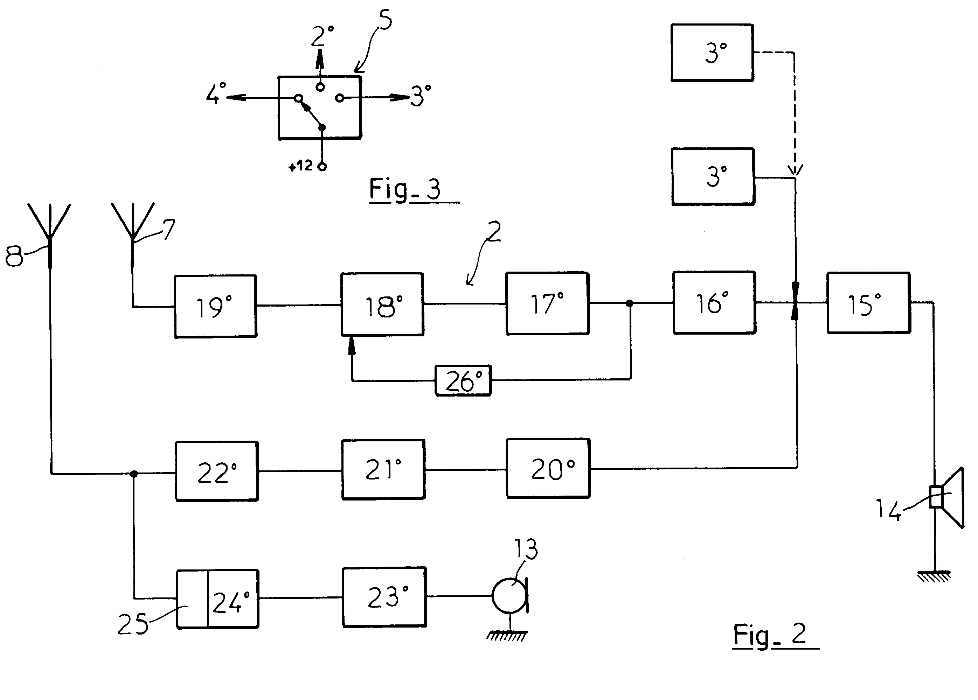

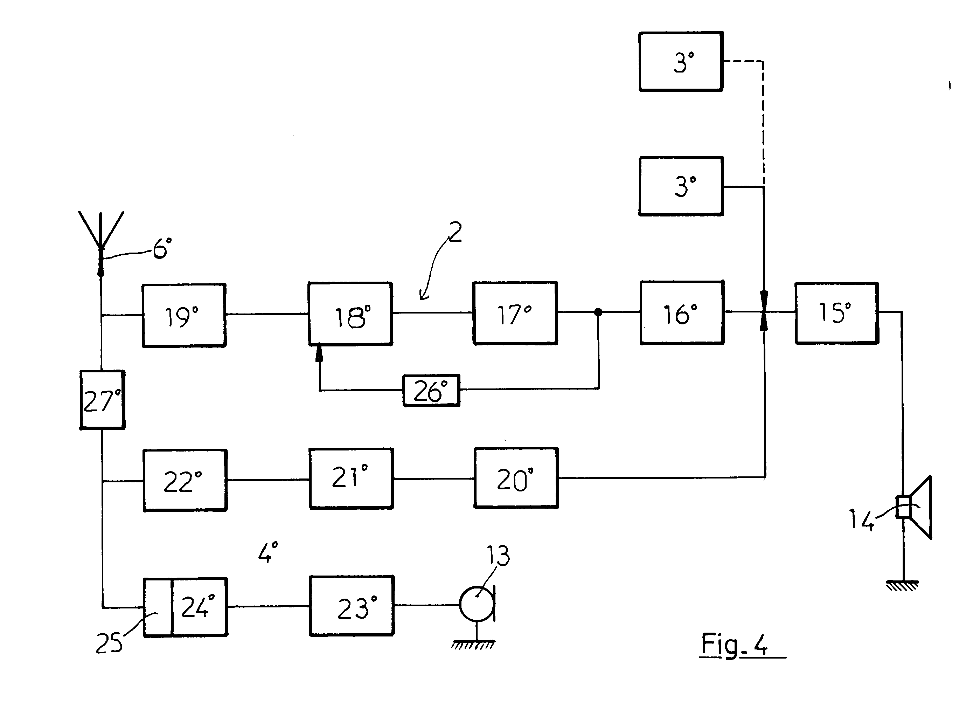

Selon les deux modes de réalisation des figures 2 et 4, les éléments essentiels du dispositif formant la radio 2 sont d'une part, l'étage à HF/FM AM 19, le changeur de fréquence de la radio 18, le démodulateur de la radio 17, le décodeur stéréo 16 ainsi que le décodeur pour la recherche de stations 26 présent au niveau du démodulateur de la radio 17 et du changeur de fréquence de la radio 18, ceci afin de pouvoir conserver une station prédéterminée sur tout le long d'un parcours.

La partie spécifique à l'appareil émetteur-récepteur 4 comprend le microphone 13, le modulateur basse fréquence 23, le modulateur 24 et l'amplificateur haute fréquence 25, l'étage haute fréquence 22, le changeur de fréquence 21 et le démodulateur 20.

Que ce soit la radio, l'appareil émetteur-récepteur 4 ou le lecteur 3, ces trois éléments aboutissent à l'amplificateur basse fréquence 15, qui est commun auxdits trois éléments, lui-même relié au haut-parleur 14.

Selon le mode de réalisation présenté à la figure 2, la radio 2 et l'appareil émetteur-récepteur 4 possèdent chacun leur antenne respective 7, 8.

Selon le second mode de réalisation de la figure 4, la radio 2 et l'appareil émetteur-récepteur 4 possèdent une antenne commune 6.

Inséré entre l'appareil émetteur-récepteur 4 et l'antenne 6, un filtre de la modulation de fréquence 27 est présent afin que les messages reçus par l'antenne 6 soient audibles au niveau du haut-parleur 14.

Les moyens d'élimination des parasites, non représentés ici, sont formés par tout moyen pouvant constituer un blindage tel que des feuilles d'aluminium, des feuilles de cuivre ou encore des bobines métalliques.

Les moyens d'élimination sont entre autres présents au niveau des tuners AM et FM sous la forme d'un boîtier métallique dont l'épaisseur est sensiblement de 0,5 mm.

Les moyens d'élimination, présents au niveau de la partie haute fréquence et fréquence intermédiaire en modulation de fréquence, sont formés par un boîtier métallique de sensiblement 1 mm d'épaisseur.

Le boîtier qui comprend l'autoradio peut être un boîtier encastrable 9 qu'il est possible de rapporter au niveau du véhicule automobile, ceci dans un but antivol.

De plus, la façade dudit boîtier peut être une façade amovible 10, là encore afin d'assurer sa protection contre le vol.

Les parasites sont éliminés grâce au blindage des parties sensibles à l'aide de feuilles d'aluminium ou de cuivre ou des bobines métalliques.

Le montage est rendu réalisable grâce à l'emploi d'un blindage efficace et précis de la partie radio FM et AM, ceci afin de protéger les autres circuits du rayonnement du châssis principal.

Tant que le signal de la bande de fréquence utilisée est présent, celui-ci aura la priorité sur le signal radio ou la lecture des cassettes audiophoniques ou des disques compacts.

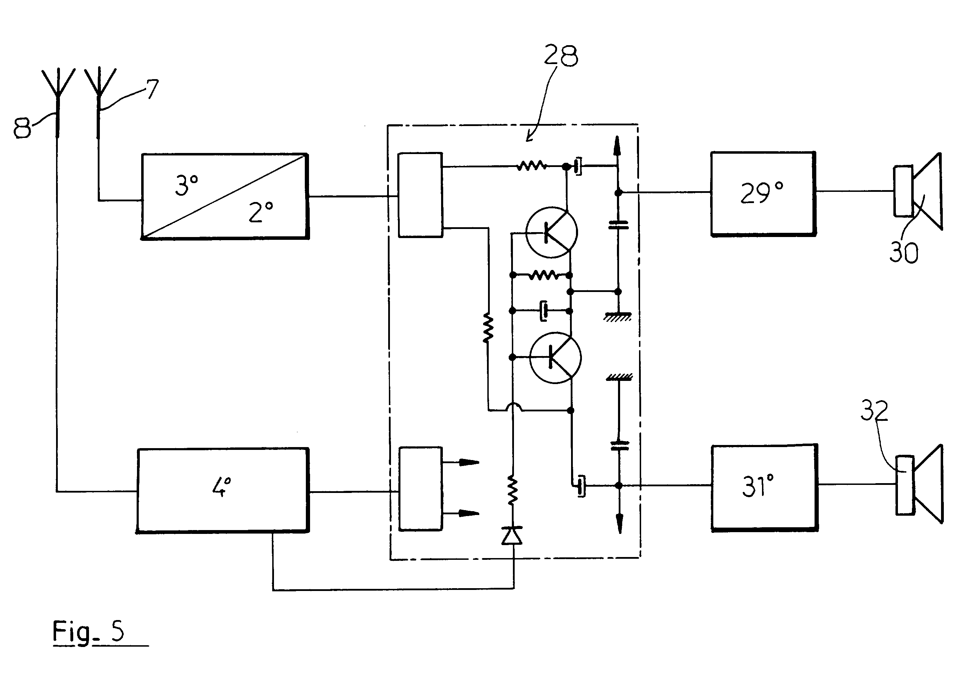

Ce fonctionnement est dû au circuit détecteur 28 de la figure 5, qui après réception de messages sur la bande de fréquence 27-28 MHz, ou de toute autre bande de fréquence autorisée, va permettre la commutation automatique de la radio 2 ou du lecteur 3 vers l'appareil émetteur-récepteur 4.

Ce circuit détecteur 28 est formé par plusieurs éléments montés soit en série soit en dérivation.

Ces éléments sont constitués de résistances, de transistors, de condensateurs et d'une diode.

Le nombre d'amplificateurs basse fréquence 29 et 31 et de haut-parleurs 30 et 32 n'est pas limitatif.

### REFERENCES

1. Combiné autoradio
2. Radio
3. Lecteur de cassettes audiophoniques ou de disques compacts
4. Appareil émetteur-récepteur dans la bande de fréquence 27-28 Mhz ou de toute autre bande de fréquence autorisée
5. Commutateur
6. Antenne commune
7. Antenne réceptrice
8. Antenne émettrice et réceptrice
9. Boîtier standard encastrable
10. Façade amovible
11. Régulateur d'alimentation
12. Alimentation batterie
13. Microphone
14. Haut-parleur
15. Amplificateur basse fréquence
16. Décodeur stéréo
17. Démodulateur de la radio
18. Changeur de fréquence de la radio
19. Etage HF/FM AM
20. Démodulateur de l'appareil émetteur-récepteur
21. Changeur de fréquence de l'appareil émetteur-récepteur
22. Etage haute fréquence de l'appareil émetteur-récepteur
23. Modulateur basse fréquence de l'appareil émetteur-récepteur
24. Modulateur de l'appareil émetteur-récepteur
25. Amplificateur haute fréquence
26. Décodeur pour la recherche de stations
27. Filtre de la modulation de fréquence
28. Circuit de détection d'un message dans la bande de fréquence 27-28 MHz avec commutation automatique
29. Amplificateur basse fréquence droit
30. Haut-parleur droit
31. Amplificateur basse fréquence gauche
32. Haut-parleur gauche
33. Afficheur de la fréquence radio
34. Afficheur du canal de l'appareil émetteur-récepteur

## Revendications

1. Combiné autoradio (1), comprenant dans un boîtier standard :
- une radio (2),
- un lecteur de cassettes audiophoniques, de disques compacts (3),
- un appareil émetteur-récepteur (4) fonctionnant dans la bande de fréquence 27-28 mégahertz (MHz), et
- des moyens d'élimination des parasites présents aux fréquences d'utilisation qui peuvent interférer entre l'appareil émetteur-récepteur (4) et le reste du combiné autoradio (1),
que l'appareil émetteur-récepteur (4) peut être mis en veille par l'intermédiaire d'un commutateur (5) qui possède un moyen donnant la priorité d'écoute à la fonction émetteur-récepteur dès qu'un message est réceptionné sur la bande de fréquence de 27-28 MHz, de sorte que le commutateur (5) coupe simultanément les fonctions non prioritaires, telles que la radio (2) ou le lecteur (3) lorsque l'un d'eux est en fonction, et
que le moyen donnant la priorité d'écoute à la fonction émetteur-récepteur dès qu'un message est réceptionné est formé par un décodeur ou comparateur ayant une valeur de seuil prédéterminée, de sorte que lorsque le signal reçu est en deçà de cette valeur, la fonction d'écoute de la radio (2) ou du lecteur (3) est conservée, lorsque le signal est au-delà de cette valeur, le commutateur (5) va activer la fonction d'écoute de l'appareil émetteur-récepteur (4) et stopper la fonction d'écoute de la radio (2) ou du lecteur (3).

2. Combiné autoradio selon la revendication 1, caractérisé par le fait
que les moyens d'élimination des parasites sont formés par des feuilles d'aluminium.

3. Combiné autoradio selon la revendication 1, caractérisé par le fait
que les moyens d'élimination des parasites sont formés par des feuilles de cuivre.

4. Combiné autoradio selon la revendication 1, caractérisé par le fait
que les moyens d'élimination des parasites sont constitués par des bobines métalliques.

5. Combiné autoradio selon l'une quelconque des revendications 2 ou 3, caractérisé par le fait
que les moyens d'élimination présents au niveau des tuners AM et FM sont formés par un boîtier métallique de sensiblement 0,5 mm d'épaisseur.

6. Combiné autoradio selon l'une quelconque des revendications 2 ou 3, caractérisé par le fait
que les moyens d'élimination, présents au niveau de la partie haute fréquence et fréquence intermédiaire en modulation de fréquence, sont formés par un boîtier métallique de sensiblement 1 mm d'épaisseur.

7. Combiné autoradio selon l'une quelconque des revendications 1 à 6, caractérisé par le fait
qu'il est formé par un boîtier standard encastrable (9).

## Patentansprüche

1. Kombi-Autoradio (1) enthaltend in einem Standard-Gehäuse:
- einem Radioempfänger (2),
- einem Lesegerät für Tonkassetten und Kompaktdisketten (3)
- einem Sender/Empfänger (4) für das Frequenzband 27-28 Megahertz (MHz) und
- Mitteln zur Unterdrückung von auf den benutzten Frequenzen vorhandenen Parasiten, die zwischen dem Sender/Empfänger (4) und dem Rest des Kombi-Autoradios (1) stören könnten, dadurch gekennzeichnet, daß
der Sender/Empfänger (4) mittels eines Schalters (5) auf Bereitschaft geschaltet werden kann, der eine Einrichtung besitzt, welche den Vorrang des Empfangs der Funktion Sender/Empfänger gibt, sobald eine Meldung auf dem Frequenzband 27-28 MHz empfangen wird, auf die Weise, daß der Schalter (5) gleichzeitig die nicht vorrangigen Funktionen, wie das Radio (2) bzw. das Lesegerät (3) abschaltet, wenn eines der beiden in Betrieb ist, und
das Mittel, welches den Vorrang des Empfangs an die Funktion Sender/Empfänger gibt sobald eine Meldung empfangen, und durch einen Decoder bzw. Komparator mit einem vorbestimmten Schwellenwert geformt wird, so daß, wenn das empfangene Signal diesseits dieses Wertes liegt, die Funktion Hören des Radios (2) oder des Lesegeräts (3) beibehalten wird, wenn das Signal jenseits dieses Wertes liegt, der Schalter (5) die Funktion Hören des Sender/Empfängers (4) aktiviert und die Hörfunktion des Radios (2) oder des Lesegerätes (3) sperrt.

2. Kombi-Autoradio gemäß Anspruch 1, dadurch gekennzeichnet, daß die Mittel zur Störungsunterdrückung von Aluminium-Folien gebildet werden.

3. Kombi-Autoradio gemäß Anspruch 1, dadurch gekennzeichnet, daß die Mittel zur Störungsunterdrückung von Kupfer-Folien gebildet werden.

4. Kombi-Autoradio gemäß Anspruch 1, dadurch gekennzeichnet, daß die Mittel zur Störungsunterdrückung von Metall-Wicklungen gebildet werden.

5. Kombi-Autoradio gemäß irgendeinem der Ansprüche 2 oder 3, dadurch gekennzeichnet, daß die Mittel zur Störungsunterdrückung auf der Ebene der AM-und FM-Tuner von einem Metallgehäuse mit im wesentlichen 0,5 mm Wandstärke gebildet werden.

6. Kombi-Autoradio gemäß irgendeinem der Ansprüche 2 oder 3, dadurch gekennzeichnet, daß die Mittel zur Störungsunterdrückung auf der Ebene der Hochfrequenz- und Zwischenfrequenz-Teile in Frequenzmodulation von einem Metallgehäuse mit im wesentlichen 1 mm Wandstärke gebildet werden.

7. Kombi-Autoradio gemäß irgendeinem der Ansprüche 1 bis 6, dadurch gekennzeichnet, daß es in einem einbaubaren Standard-Gehäuse (9) angeordnet ist.

## Claims

1. Car radio combination unit (1) containing in a standard box:
- a radio (2),
- an audio-cassette and compact disc player (3),
- a transceiver (4) operating on the 27-28 megahertz (MHz) frequency,
- and means for eliminating interference on the used frequency between the transceiver (4) and the remainder of the car combination unit (1),
characterized in that the transceiver (4) can be set to standby using a switch (5) which has a feature giving listening priority to the transceiver as soon as a message is received on the 27-28 MHz frequency band so that switch (5) simultaneously cuts off non-priority functions such as the radio (2) and the cassette player (4) when one of them is operating and,
that the means giving listening priority to the transceiver function as soon as a message is received consists of a decoder and comparator having a pre-determined threshold so that when the received signal is below this value the listening function of the radio (2) or the cassette player (3) is retained and when the signal is above this value switch (5) activates the transceiver listening function (4) and stops the listening function of the radio (2) and player (3).

2. Car radio combination unit as per claim 1, characterized in that
the means for eliminating interference consists of aluminium sheets.

3. Car radio combination unit as per claim 1, characterized in that
the means for eliminating interference consists of copper sheets.

4. Car radio combination unit according to claim 1, characterized in that
the means for eliminating interference consists of metal coils.

5. Car radio combination unit according to any one of claims 2 or 3, characterized in that
the suppression means present at the AM and FM tuner consists of a metal box of essentially 0.5 mm thickness,

6. Car radio combination unit according to any one of claims 2 or 3, characterized in that
the suppression means present on the high frequency and intermediate frequency by frequency modulation consists of a metal box of essentially 1 mm thickness.

7. Car radio combination unit according to any one of claims 1 to 6, characterized in that
it consists of a standard fully removable box (9).
